(19) Europäisches Patentamt
European Patent Office
Office européen des brevets

(11) EP 0 715 659 B1

(12) **EUROPÄISCHE PATENTSCHRIFT**

(45) Veröffentlichungstag und Bekanntmachung des Hinweises auf die Patenterteilung:
**03.11.1999 Patentblatt 1999/44**

(21) Anmeldenummer: **95918522.4**

(22) Anmeldetag: **11.05.1995**

(51) Int Cl.[6]: **C25B 1/00**, B01D 61/44

(86) Internationale Anmeldenummer:
**PCT/DE95/00643**

(87) Internationale Veröffentlichungsnummer:
**WO 95/33084 (07.12.1995 Gazette 1995/52)**

(54) **ELEKTROCHEMISCHES VERFAHREN UND VORRICHTUNG ZUR HERSTELLUNG VON METALLHYDROXIDEN UND/ODER METALLOXIDHYDROXIDEN**

ELECTROCHEMICAL PROCESS AND DEVICE FOR THE PRODUCTION OF METAL HYDROXIDES AND/OR METAL OXIDE HYDROXIDES

PROCEDE ET DISPOSITIF ELECTROCHIMIQUES DESTINES A LA PRODUCTION D'HYDROXYDES METALLIQUES ET/OU D'HYDROXYDES D'OXYDES METALLIQUES

(84) Benannte Vertragsstaaten:
**AT BE CH DE DK ES FR GB GR IE IT LI LU MC NL PT SE**
Benannte Erstreckungsstaaten:
**LT SI**

(30) Priorität: **26.05.1994 DE 4418440**

(43) Veröffentlichungstag der Anmeldung:
**12.06.1996 Patentblatt 1996/24**

(73) Patentinhaber: **FRAUNHOFER-GESELLSCHAFT ZUR FÖRDERUNG DER ANGEWANDTEN FORSCHUNG E.V.
80636 München (DE)**

(72) Erfinder:
- **BAUER, Bernd
D-66130 Fechingen (DE)**
- **MENZEL, Thomas
D-70567 Stuttgart (DE)**

(56) Entgegenhaltungen:
**WO-A-90/06167**

- **DATABASE WPI Week 9231 Derwent Publications Ltd., London, GB; AN 92-254301 & JP,A,04 171 027 (TOSOH CORP) , 18.Juni 1992**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 715 659 B1

Printed by Jouve, 75001 PARIS (FR)

## Beschreibung

Die Erfindung betrifft ein elektrochemisches Verfahren zur Herstellung von Metallhydroxiden und/oder Metalloxidhydroxiden aus Metallionen und Hydroxidionen, sowie eine Vorrichtung zur Durchführung des Verfahrens.

Technisches Gebiet:

Metallhydroxide und Metalloxidhydroxide finden in den unterschiedlichsten Industriellen Bereichen breiteste Anwendung, so z.B. als Zwischenprodukte bei der Herstellung der Metalle selbst oder der entsprechenden Metalloxide, die dann ihrerseits weiterverarbeitet werden, z.B. zu Keramiken, etc..

Zinkhydroxide z.B. können als Vorstufen für Pigmente, Photoleiter (z.B. In der Elektrophotographie), Katalysatorbestandteile (z.B. bei der Methanolsynthese), Leuchtstoffe, Absorptionsmittel (z.B. zur Entfernung von $H_2S$ aus Gasen), etc. verwendet werden. Zinnoxid-hydrate eignen sich z.B. als Katalysator-Bestandteil für die Oxidation von Aromaten, Eisen(III)-hydroxid wird z.B. in der Wasserreinigung, für pharmazeutische Zwecke oder zur Herstellung von Eisenfarben eingesetzt, und Cobalt(II)-hydroxid kann z.B. als Ausgangsmaterial zur Herstellung von Sikkativen dienen. Bei vielen Anwendungen der Metallhydroxide und der Metalloxidhydroxide kommt es Insbesondere auf deren Partikelform, auf deren Partikelgröße und auf deren Partikelgrößenverteilung an.

So wird z.B. in der chemischen Industrie Ni(II)-hydroxid als Basischemikalie im Bereich keramischer Produkte und vor allem für den Bau von Akkumulatoren verwendet. Neben der Verwendung als positive Elektrode in handelsüblichen Sekundärzellen, wie Nickel-Cadmium- und Nickel-Eisen-Batteriesystemen, wird Nickelhydroxid in zunehmendem Maße in schwermetallfreien, umweltfreundlichen Nickel-Metallhydrid-Akkumulatoren eingesetzt. Die aktiven Komponenten der Akkumulatoren sind die Anode, die aus einer schwermetallfreien, hydrierbaren Metallegierung besteht, und die aus NIckelhydroxid bestehende Kathode. Die Masseelektroden werden in ein gasdichtes Stahlgehäuse eingelegt und durch ein Kunststoffvlies getrennt. Bedingt durch den mechanischen Aufbau des Akkumulators werden an das Produkt Nickelhydroxid verschiedene Anforderungen bzgl. Morphologie und Habitus gestellt. Es soll ein möglichst gleichmäßiges Produkt mit einer sphärischen Morphologie und enger Partikelgrößenverteilung erhalten werden, um ein gutes Fließverhalten bei der Füllung der porösen NIckel-Schaumelektroden zu erzielen.

Stand der Technik :

Zur Darstellung der Metallhydroxide und der Metalloxidhydroxide werden verschiedene Wege über die Fällung aus Metallsalzlösungen im alkalischen Milieu beschrieben. Bei der Fällung von Nickelhydroxid z.B. wird in erster Linie vom Nickelchlorid ausgegangen. Die Fällung aus Nickelsulfat-, Nickelcarbonat- und Nickelnitratlösungen ist ebenfalls bekannt. Als Fällungsmittel werden Alkalihydroxide, Erdalkalihydroxide, Alkalicarbonate und wäßrige Ammoniaklösungen eingesetzt.

Die Darstellung von Nickelhydroxid aus einer mit Alkali versetzten Nikkel(II)-chloridlösung bei erhöhter Temperatur (T ≈ 70 - 80 °C) entspricht folgender Bruttogleichung:

$$NiCl_2 + 2\ NaOH \rightarrow Ni(OH)_2\downarrow + 2\ NaCl$$

Dabei fällt Nickel(II)-hydroxid als voluminöser, gelartiger, grüner Niederschlag aus, der dann beim Stehen zu einem amorphen Produkt entwässert. Das auf diese Weise gefällte Hydroxid liegt auch nach dem Trocknen in kolloidaler Form vor und entspricht hinsichtlich seiner physikalisch-chemischen und morphologischen Eigenschaften nicht den gewünschten Anforderungen zur Verwendung in Akkumulatoren.

Ganz allgemein entspricht die Fällung von Metallhydroxiden mit Natronlauge aus Metallchlorid-Lösungen folgender Bruttogleichung:

$$MCl_n + n\ NaOH \rightarrow M(OH)_n\downarrow + n\ NaCl$$

Eine gezielte Beeinflussung der physikalisch-chemischen und der morphologischen Eigenschaften von Nikkelhydroxid kann durch Zugabe von Ammoniak während der Produktbildung erfolgen. Der Ammoniak dient als Komplexierungsmittel und verhindert eine spontane Ausfällung des Hydroxids. Ammoniak steigert das Löslichkeitsprodukt von Nickelhydroxid und verringert dadurch bei bestimmten Eduktkonzentrationen eine relative Übersättigung. Dieses Verfahren zur Herstellung von Nickelhydroxid wird in einem Reaktor (Rührkessel- oder Schlaufenreaktor) durch Einleiten von Ammoniak im Überschuß (6-facher Überschuß) in eine alkalische Nickelchloridlösung durchgeführt. Das reine Produkt wird nach Abtrennen durch Filtration, Trocknung und einem mehrstufigen Waschprozeß mit erneuter

Filtration und Trocknung gewonnen. Derartige Produkte erfüllen allerdings nicht die genannten Anforderungen an die Teilchenform, die Partikelgrößenverteilung und die Fließfähigkeit des Materials.

Bei chemischen Verfahren der Fällungskristallisation zur Herstellung von Metallhydroxiden fallen zudem zwangsläufig pro Mol Metallhydroxid z.B. n Mole NaCl an, wenn die Fällung mittels Natronlauge aus einer Metallchlorid-Lösung erfolgt. Im Hinblick auf strengere Umweltrichtlinien und niedrigere Grenzwerte für Abwässer einerseits und wirtschaftliche Aspekte, bedingt durch einen hohen Verbrauch an Lauge, und resultierende Deponiekosten für das anfallende Salz andererseits sind geschlossene Produktlonskreisläufe erstrebenswert.

Bei einer derartigen Verfahrensführung wird beispielsweise Nickel mittels Elektrolyse anodisch in einer Metallsalzlösung aufgelöst und durch kathodisch gebildete Hydroxidionen als Nickelhydroxid gefällt. Nach einer Sedimentation und verschiedenen, nachfolgenden Waschstufen wird das gefällte Produkt von noch vorhandenen bzw. bei der Fällung eingeschlossenen Salzen gereinigt.

Aus der JP-63/247385 ist die elektrolytische Herstellung von Metallhydroxiden unter Verwendung perfluorierter Anionenaustauschermembranen und dem Einsatz inerter Elektroden bekannt. Dabei wird als Elektrolyt auf der Anodenseite ein Salz desjenigen Metalls eingesetzt, dessen Hydroxid hergestellt werden soll, und im Kathodenkreislauf wird eine wäßrige, alkalische Lösung verwendet.

Eine vergleichbare Anordnung ist in der EP 0559590 A1 beschrieben. Dabei werden die Metallionen durch anodische Auflösung einer Elektrode kontinuierlich erzeugt. Die Anforderungen an den Prozeß und die Verfahrensparameter, insbesondere die zu verwendenden Membranen und Elektrolytlösungen, sind jedoch nur unzureichend offenbart.

Mit den beschriebenen Verfahren erhält man jedoch keine Hydroxidpartikel, die die genannten Anforderungen an die Partikelform, die Partikelgröße, die Partikelgrößenverteilung und die Fließfähigkeit erfüllen.

Aufgabe der vorliegenden Erfindung ist es deshalb, ein Verfahren bereitzustellen, mit dem Metallhydroxide und/oder Metalloxidhydroxide gefertigt werden können, die kompakt sind, die hohe Packungsdichten, eine hohe Fließfähigkeit und sphärische Partikelformen aufweisen, sowie eine enge Partikelgrößenvertellung und konstante Qualität. Das Verfahren soll außerdem kostengünstig, universell einsetzbar und unabhängig vom gewünschten Metallhydroxid und/oder Metalloxidhydroxid sein. Ferner soll das Verfahren kontinuierlich betrieben werden können und es sollen keine Nebenprodukte anfallen, die entsorgt werden müssen.

<u>Darstellung der Erfindung :</u>

Gelöst wird diese Aufgabe durch ein elektrochemisches Verfahren zur Herstellung von Metallhydroxiden und/oder Metalloxidhydroxiden, bei dem Metallionen durch Hydroxidionen gefällt werden und das dadurch gekennzeichnet ist, daß das Metallhydroxid und/oder Metalloxidhydroxid in einer Kammer K gebildet wird, die kathodenseitig von einer bipolaren Membran begrenzt ist, daß die erforderlichen Hydroxidionen mit einer bipolaren Membran erzeugt werden, deren anionenselektive Schicht anodenseitig angeordnet ist, und daß die Metallionen in Gegenwart eines die Metallionen komplexierenden und sich in der Kammer K befindlichen Agens und bei einem pH-Wert > 7 der Kammer K zugeführt oder in der Kammer K gebildet werden.

Das erfindungsgemäße Verfahren zeigt gegenüber dem Stand der Technik den großen Vortell, daß Metallhydroxid- und/oder Metalloxidhydroxidpartikel mit den gewünschten Eigenschaften (Partikelform, Partikelgröße, Partikelgrößenverteilung, Fließverhalten) entstehen, und daß die erforderlichen Hydroxidionen durch Wasserdissoziation mit Hilfe von bipolaren Membranen zugeführt werden. Dadurch wird die Salzfracht und das Entstehen von Nebenprodukten erheblich reduziert. Das erfindungsgemäße Verfahren stellt ein kontinuierliches Verfahren zur Herstellung von amorphen bzw. sphärischen Metallhydroxiden und/oder Metalloxidhydroxiden mittels Membranelektrolyse aus Metallkomplexlösungen dar. Bei dem erfindungsgemäßen Verfahren werden Metallionen mit einem Komplexierungsmittel versetzt, und aus der sich bildenden Komplexverbindung wird das Metallhydroxid und/oder Metalloxidhydroxid durch Zugabe von Hydroxidionen gefällt.

<u>Wege zur Ausführung der Erfindung :</u>

Hinsichtlich der Zuführung der Metallionen in die Kammer K gibt es zwei Verfahrensvarianten.

Variante 1:

Bei der ersten Variante werden die Metallionen durch anodische Auflösung einer Opferanode direkt in der Kammer K erzeugt. Dazu wird die Kammer K anodenseitig von einer Opferanode begrenzt, die Kammer K bildet also somit den Anodenraum. Dieser ist durch die bipolare Membran vom Kathodenraum getrennt, so daß sich zwei getrennte Kreisläufe ergeben. Ferner enthält die Kammer K das Komplexierungsmittel und weist einen pH-Wert auf, der größer ist als 7. Wird nun eine Potentialdifferenz angelegt, so gehen an der Anode unter Elektronenabgabe Metallionen in

Lösung und bilden zunächst mit dem Komplexierungsmittel Komplexverbindungen. Dadurch wird eine spontane Fällung der Metallhydroxide und/oder Metalloxidhydroxide verhindert. Unter dem Einfluß des elektrischen Feldes werden ferner mit Hilfe der bipolaren Membran Hydroxidionen erzeugt, die durch die anionenselektive Schicht der bipolaren Membran In die Kammer K wandern. Sobald das Löslichkeitsprodukt der Metallhydroxide und/oder Metalloxidhydroxide überschritten wird, fallen diese aus. Die Fällung folgt dabei einem dynamischen Gleichgewicht, wobei eine LIganden-austausch (Komplexierungsmittel gegen Hydroxid) stattfindet.

Kurze Beschreibung der Figur 1 :

Figur 1 zeigt eine Membrankonfiguration für die Verfahrensvariante 1, wobei die kleinste Einheit aus Kathode, bipolarer Membran und Anode besteht und wobei die anionenselektive Schicht der bipolaren Membran anodenseitig angeordnet ist. Es ist auch möglich, mehrere Zellen zu einer Reihe in Form eines Stapels anzuordnen, wobei die Anordnung der Kammern benachbarter Zellen invers ist, so daß benachbarte Zellen jeweils eine Elektrode gemeinsam haben und sich die folgende Konfiguration ergibt. Dabei steht BPM für eine bipolare Membran, deren anionenselektive Schicht jeweils anodenseitig angeordnet ist. Die Einheit mit dem Index n kann wiederholt werden, wobei n Werte zwischen 0 und 100 einnimmt.

$$\text{Kathode - BPM - (Anode - BPM - Kathode - BPM-)}_n \text{ Anode}$$

Als Katholyt können alkalische Lösungen, wie z.B. Natron- oder Kalilauge eingesetzt werden. Für die Wirtschaftlichkeit des Verfahrens ist es dabei von Vorteil, wenn die Lösung selbst eine hohe Leitfähigkeit besitzt und das Kation der verwendeten Lauge auf der Anodenseite ebenfalls zum Einsatz kommt. Die Kathode selbst kann z.B. aus vergütetem Stahl, platiniertem Titan, Nickel oder einer Nickellegierung bestehen.
Die Zusammensetzung des Anolyt in der Verfahrensvariante 1, d.h. der Inhalt der Kammer K, ergibt sich aus den Edukten zur Herstellung der Metallhydroxide und/oder Metalloxidhydroxide. Diese sind das Komplexierungsmittel sowie ein Salz zur Erhöhung der Leitfähigkeit (z.B. NaCl). Um die anodische Auflösung der Metalle zu verbessern, können geringe Mengen an Sulfationen zugegeben werden, vorteilhafterweise in Form als Sulfat desjenigen Metalls, dessen Hydroxid und/oder Oxidhydroxid hergestellt werden soll.
Die BIldung des sphärischen Produktes wird dabei wesentlich durch die Fällbedingungen, d.h. durch die Konzentration der Einzelkomponenten und durch die Temperaturführung im Anodenkreislauf bestimmt. Das gefällte Produkt kann dann kontinuierlich aus dem Anolytkreislauf abgetrennt werden. Diese Abtrennung ist verfahrenstechnisch einfach auszuführen und kann aufgrund des großen Dichteunterschieds des gebildeten Produktes und des Lösungsmittels in einem Sedimentationsbehälter durchgeführt werden. Zur Abtrennung eines Produktes mit einheitlicher Korngröße kann die Abtrennung über eine Filtrationsstufe (Mikrofiltration) erfolgen. Der wesentliche Vortell dieser Verfahrensvariante ist, daß zusätzliche, einzelne Verfahrensschrltte zur Rückgewinnung der verschiedenen Edukte entfallen, da sie im Anolytkreislauf gehalten werden.
Die Verfahrensvariante 1 ist für all diejenigen Metalle anwendbar, die anodisch auflösbar und im alkalischen Milieu komplexierbar sind. Ohne Einschränkung der Allgemeinheit sind dies z.B. Co, Ni, Cu, Fe, In, Mn, Sn, Zn, Zr, Ti, Al, Cd und U, wobei Co und Ni ganz besonders bevorzugt sind.

Variante 2:

Bei der zweiten Variante werden einer der Kammer K anodenseitig benachbarten und von dieser durch eine Kationenaustauschermembran getrennten Kammer $K_1$ Metallionen zugeführt, entweder in Form von Metallsalzen oder durch Auflösen der Metalle in saurem Milieu. Die Kammer K enthält das Komplexierungsmittel und weist einen pH-Wert auf, der größer ist als 7. Wird nun eine Potentialdifferenz angelegt, so wandern unter dem Einfluß des elektrischen Feldes Metallkationen durch die Kationenaustauschermembran von der Kammer $K_1$ in die Kammer K. Dort bilden sie zusammen mit dem Komplexierungsmittel zunächst Metallkomplexverbindungen. Außerdem werden unter dem Einfluß des elektrischen Feldes mit Hilfe der bipolaren Membran Hydroxidionen erzeugt, die durch die anionenselektive Schicht der bipolaren Membran ebenfalls in die Kammer K wandern. Sobald das Löslichkeitsprodukt des Metallhydroxids überschritten wird, fällt dieses aus.

Kurze Beschreibung der Figur 2 :

Figur 2 zeigt eine Membrankonfiguration für die Verfahrensvariante 2. Diese Variante stellt eine Elektrodlalyse mit bipolaren Membranen im Dreikammerprozeß dar. BPM bedeutet bipolare Membran, AAT Anionenaustauschermembran und KAT Kationenaustauschermembran. Die Einheit mit dem Index n kann wiederholt werden, wobei n Werte

zwischen 1 und 50 einnimmt.

$$\text{KATHODE - (BPM - KAT - AAT - )}_n \text{ BPM - KAT - ANODE}$$

Direkt vor der Anode ist vorzugsweise eine Kationenaustauschermembran eingebaut, so daß eine zusätzliche Kammer vor der Anode geschaffen ist. Diese dient in erster Linie dazu, daß anodisch gebildeter Sauerstoff die anionenselektive Schicht der bipolaren Membran nicht zerstört.

Die Salzlösung wird der mittleren Kammer (Diluat) der sich wiederholenden Einheit zugeführt. Unter der treibenden Kraft des angelegten Potentials an den Elektroden, werden die Metallionen über die Kationenaustauschermembran in das basische Konzentrat überführt. Im sauren Konzentrat der sich wiederholenden Einheit wird die zur Auflösung des Metalls notwendige Mineralsäure zurückgewonnen.

Als Katholyt können wiederum alkalische Lösungen, wie z.B. Natron- oder Kalilauge eingesetzt werden. Auch hier ist es für die Wirtschaftlichkeit des Verfahrens von Vorteil, wenn die Lösung selbst eine hohe Leitfähigkeit besitzt und das Kation der verwendeten Lauge auf der Anodenseite ebenfalls zum Einsatz kommt. Die Kathode selbst kann z.B. aus vergütetem Stahl, platiniertem Titan, Nickel oder einer Nickellegierung bestehen.

Der Inhalt der Kammer K ergibt sich wieder aus den Edukten zur Herstellung der Metallhydroxide und/oder Metalloxidhydroxide. Diese sind das Komplexierungsmittel sowie ein Salz zur Erhöhung der Leitfähigkeit (z.B. NaCl). Es können geringe Mengen an Sulfationen zugegeben sein, vorteilhafterweise in Form als Sulfat desjenigen Metalls, dessen Hydroxid und/oder Oxidhydroxid hergestellt werden soll.

Die Bildung des sphärischen Produktes wird dabei wieder wesentlich durch die Fällbedingungen, d.h. durch die Konzentration der Einzelkomponenten und durch die Temperaturführung im Kreislauf der Kammer K bestimmt. Das gefällte Produkt kann kontinuierlich aus diesem Kreislauf abgetrennt werden. Die Abtrennung ist verfahrenstechnisch einfach auszuführen und kann aufgrund des großen Dichteunterschiedes des gebildeten Produktes und des Lösungsmittels in einem Sedimentationsbehälter durchgeführt werden. Zur Abtrennung eines Produktes mit einheitlicher Korngröße kann die Abtrennung über eine Filtrationsstufe (Mikrofiltration) erfolgen. Der wesentliche Vorteil dieser Verfahrensvariante ist, daß zusätzliche, einzelne Verfahrensschritte zur Rückgewinnung der verschiedenen Edukte entfallen, da sie im Kreislauf der Kammer K gehalten werden.

Die Verfahrensvariante 2 ist für all diejenigen Metalle anwendbar, die im alkalischen Milieu komplexierbar sind. Ohne Einschränkung der Allgemeinheit sind dies z.B. Co, Ni, Cu, Fe, In, Mn, Sn, Zn, Zr, Ti, Al, Cd und U, wobei Co und Ni ganz besonders bevorzugt sind.

Üblicherweise werden in der Elektrolyse bzw. der Membranelektrolyse verbrauchte Nickelopferanoden als Kathode geschaltet. Wenn die mechanische Stabilität der Elektroden nicht mehr ausreicht, so müssen diese entsorgt werden. Durch eine Kombination der Verfahrensvarianten 1 und 2 ist es nun möglich geworden, die Wirtschaftlichkeit des Gesamtprozesses zu erhöhen. Dazu werden zunächst gemäß Variante 1 die Metallionen durch anodische Auflösung einer Opferanode erzeugt. Ist diese ausgebrannt, so wird die Elektrode mittels einer Neutralsäure aufgelöst und es entsteht eine Metallsalzlösung, die mit Hilfe der Variante 2 des erfindungsgemäßen Verfahrens weiterverarbeitet wird. Vom wirtschaftlichen Standpunkt aus betrachtet erfolgt somit eine vollständige Verwertung des eingesetzten Metalls zur Herstellung der entsprechenden Hydroxide und/oder Oxidhydroxide.

Desweiteren kann die Verfahrensvariante 2 auch gewählt werden, falls die Kosten für hochreine Metallopferanoden zu hoch sein sollten. Dann kann das Metall auch in anderer Form, d.h. in weniger reiner Form als Rohstoff eingesetzt werden.

Im Folgenden ein Fließschema der Elektrodialyse mit bipolaren Membranen zur Gewinnung von Metallhydroxiden gemäß Verfahrensvariante 2

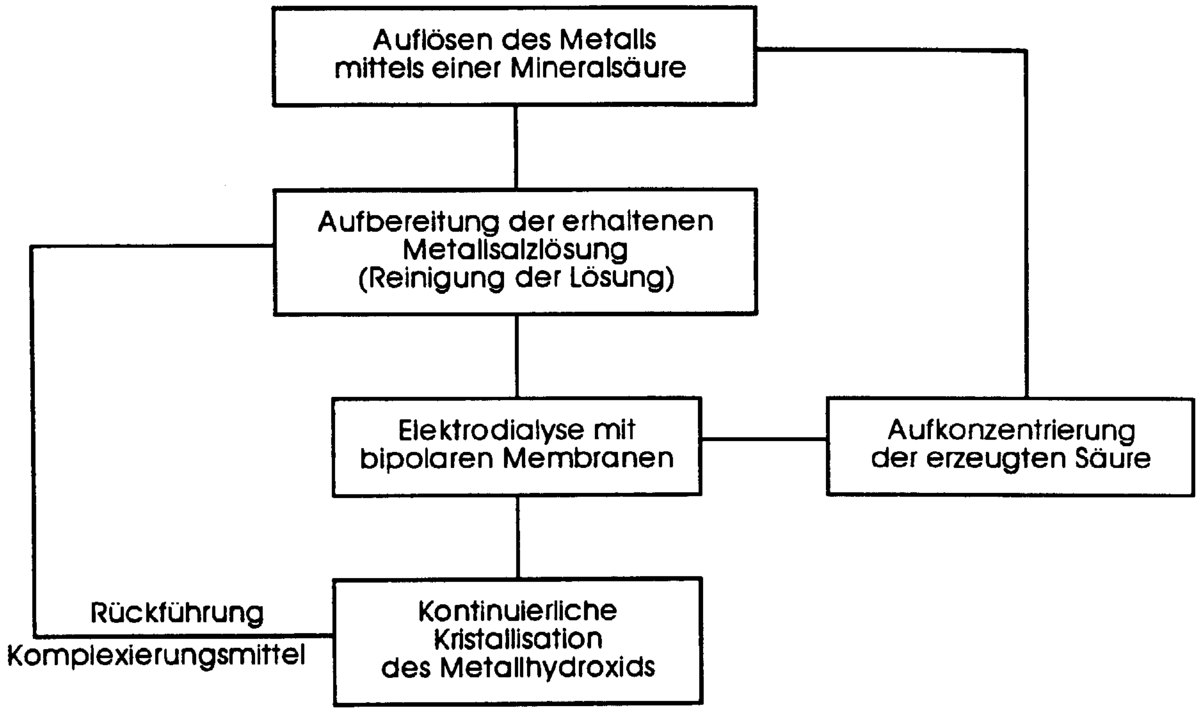


Die Art des eingesetzten Komplexierungsmittels richtet sich nach der Art des zu komplexierenden Metalls. Der Fachmann ist aufgrund seiner Kenntnisse in der Lage, für die jeweiligen Metallionen geeignete Komplexierungsmittel zu wählen. Ferner ist es möglich, Mischungen von Komplexierungsmittel einzusetzen. Bevorzugte Komplexierungsmittel sind Ammoniak oder Amine der allgemeinen Formel I,

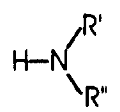
(I)

in der die Reste folgende Bedeutung haben:

R' = Wasserstoff, Alkyl oder Aryl mit jeweils 1 bis 6 Kohlenstoffatomen;
R" = Alkyl oder Aryl mit jeweils 1 bis 6 Kohlenstoffatomen.

Ohne Einschränkung der Allgemeinheit sind geeignete Amine zur Durchführung des erfindungsgemäßen Verfahrens Butylmethylamin, Butylethylamin, Butylpropylamin, Dibutylamin, Dietylamin, Dimethylamin, Dipropylamin, Ethylmethylamin, Ethylpropylamin, Methylpropylamin, Methylamin, Ethylamin, Propylamin und Butylamin.

Bevorzugte bipolare Membranen zur Durchführung es erfindungsgemäßen Verfahrens sind solche mit einer anionenselektiven Schicht auf der Basis polymerer Alkylierungsmittel und monomerer Amine, oder polymerer Amine und monomerer Alkylierungsmlttel, oder polymerer Alkylierungsmittel und polymerer Amine. Desweiteren sind bipolare Membranen mit einer anionenselektiven Schicht auf der Basis eines oder mehrerer -$CHCl_2$-Gruppen tragender Polymere oder auf der Basis einer Mischung aus -$CHCl_2$-Gruppen tragenden Polymeren und solchen ohne -$CHCl_2$-Gruppen bevorzugt. Diese Polymere, mit oder ohne - $CHCl_2$-Gruppen, sind bevorzugt Polysulfone, Polyethersulfone, Poly(p-phenylensulfone), Polystyrole, Polyphenylenoxide, Poly(2.6-dimethylphenylether), Polyphenylensulfide, Polyetherketone (PEK), Polyetheretherketone (PEEK) oder Polyetheretherketonketone (PEEKK). Derartige bipolare Membranen sind ausführlichst in der DE 4211267 A1 sowie der DE 4026154 A1 beschrieben. Es wird ausdrücklich auf die Ausführungen in diesen beiden Schriften verwiesen.

Desweiteren sind bipolare Membranen mit einer anionenselektiven Schicht auf der Basis von DABCO (1.4-Dlazabicyclo-[2.2.2]octan), von 1.3-Bis(dimethylamino-2.2-dimethylpropan) oder einem anderen Diamin bevorzugt, welches alkalistabile, quartäre Ammonium-lonen zu bilden vermag und bei welchem die Monoquaternisierung gegenüber der Bisquaternisierung durch eine unterschiedliche Nucleophilie von mindestens $\Delta pK_a > 1.0$ begünstigt wird.

Derartige Membranen sind ebenfalls in der DE 4211267 A1 sowie der DE 4026154 A1 ausführlichst beschrieben und zeichnen sich durch

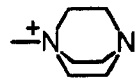

Gruppen und/oder durch

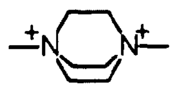

und/oder durch

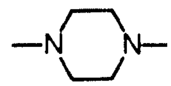

Brücken in der anionenselektiven Schicht aus. Derartige bipolare Membranen sind extrem alkalistabil und deshalb für den Einsatz im erfindungsgemäßen Verfahren ganz besonders gut geeignet.

Am Beispiel der Herstellung von Nickelhydroxid wird das erfindungsgemäße Verfahren gemäß Variante 1 näher erläutert.

| Elektrolytzusammensetzung : | |
|---|---|
| Anolyt | 16.5 mmol/l $NiSO_4$ |
| | 220 ml $NH_3$ (25 %-ig) |
| | 2 mol/l NaCl |
| Katholyt | 1 mol/l NaOH |

| Verfahrensbedingungen : | |
|---|---|
| Anode | elektrochemisch hergestellte Reinstnickelelektrode |
| Kathode | platiniertes Titan |
| T | 323 K |
| Stromdichte i | 107 $mA/cm^2$ |
| Spannungsabfall U | 2.75 V |
| Kammerhöhe | jeweils 2 mm |
| Überströmgeschwindigkeit | > 10 cm/sec |
| pH-Wert im Anolyt | 10.5 - 11.5 |

Unter galvanostatischen Bedingungen entsteht zuerst ein intensiv blauer Hexamminkomplex. Mit zunehmender anodischer Auflösung des Nickels bildet sich daraus partikuläres, grünes Nickelhydroxid, das bei Überschreiten der Löslichkeitsgrenze ausfällt.

Kurze Beschreibung der Figur 3 :

Eine geeignete Vorrichtung zur Durchführung des erfindungsgemäßen Verfahrens gemäß der Variante 1 ist in Figur 3 wiedergegeben. Mit dieser Vorrichtung ist eine kontinuierliche Prozeßführung mit integrierter Produktbildung und Abtrennung desselben möglich. Die Vorrichtung besteht im wesentlichen aus einer zylindrischen Kopfgeometrle, in der um ein Tauchrohr die innere Elektrode angebracht ist. Diese ist vorzugsweise die Kathode. Als Kathodenmaterial kann Edelstahl, Nickel oder ein platiniertes Metall eingesetzt werden. In der Mitte der inneren Elektrode befindet sich ein Auslaß, der mit dem Tauchrohr versehen ist. Die äußere Begrenzung, d.h. der äußere Zylinder, ist die zweite Elektrode. Diese ist vorzugsweise die Opferanode. Zwischen den beiden Elektroden im zylindrischen Teil befindet sich die bipolare Membran mit anodenseitig angeordneter anionenselektiver Schicht, so daß zwei getrennte Flüssigkeitsräume entstehen. Der Innere Elektrodenraum weist an der Oberfläche zwei Bohrungen auf, über die die Zu- und Abführung des Elektrolyten, vorzugsweise des Anolyten, erfolgt. Der zylindrische Teil des Kathodenraums kann weiterhin mit Leitgeometrien mit dem Ziel einer guten Durchströmung der Kammer und zur Abführung der an der Kathode gebildeten Gase ausgestattet sein. Die Zuführung der flüssigen Lösung in den äußeren Elektrodenraum, vorzugsweise der Anodenraum, erfolgt tangential zur Zylindergeometrie. Dieser Raum kann ebenfalls zusätzlich noch mit Leit- oder Drallschaufeln ausgestattet werden. An diesen zylindrischen Teil schließt sich ein kegelförmiger Teil an, so daß für den Auslaß der Flüssigkeit zwei Möglichkeiten bestehen, nämlich ein unterer Ablauf und ein oberer Überlauf. Die Wirkungsweise dieser erfindungsgemäßen Vorrichtung im Anodenraum hinsichtlich der Klasierung suspendierter Partikel ist einem Hydrozyklon vergleichbar, ebenso die hydrodynamischen Verhältnisse. Die Trennung der Partikel bei Verwendung eines Hydrozyklons erfolgt im Zentrifugalfeld, d.h. der Radius des zylindrischen Kopfes bestimmt die Größe der abgetrennten Partikel in Abhängigkeit ihrer Dichte.

Für die kontinuierliche Gewinnung des Metallhydroxids und/oder Metallhydroxids ergibt sich nun folgende Verfahrensführung, wobei hier die innere Elektrode die Kathode ist und die äußere die Anode:
Ein elektrisches Feld wird an beide Elektroden angelegt. Die Bildung des Metallkomplexes mit der oben beschriebenen anodischen Auflösung und Reaktion der verschiedenen Stoffe erfolgt Im zylindrischen Teil der Vorrichtung. Bei den entsprechend der Produktqualität, d.h. entsprechend der Größe des Metallhydroxidkorns, festgelegten geometrischen Abmaßen der Vorrichtung erfolgt die Abtrennung des gebildeten Produktes im kegelförmigen Teil der Vorrichtung. Der Bulk der Lösung mit zu kleinen Partikeln wird durch den oberen Ablauf im Kreislauf gehalten und rezirkuliert, während ein kleiner Teilstrom mit der entsprechenden Korngröße durch den unteren Ablauf entfernt wird. Ein Zuwachsen der Anodenkammer bzw. eine Deckschichtbildung auf der Membran ist durch die relativ höhere Umfanggeschwindigkeit an der Membranoberfläche im Vergleich zu der o.b. konventionellen Geometrie weitgehend unterbunden. Die Auflösung der Opferanode läuft durch die definierte Strömungsform und wegen der vergleichsweise hohen Tangentialgeschwindigkeit sehr gleichmäßig ab.

Mit der erfindungsgemäßen Vorrichtung lassen sich all die Hydroxid- und/oder Oxidhydroxidfällungen durchführen, deren Dichteunterschied zwischen Lösungsmittel (meist Wasser) und dem Hydroxid- und/oder Oxidhydroxid groß genug sind.

Der Betrieb der erfindungsgemäßen Vorrichtung mit vertauschten Elektroden, d.h. Kathode außen und Anode innen, ist ebenfalls möglich. Dabei richtet sich die Anordnung der Elektroden nach den Erfordernissen des jeweiligen Anwendungsfalles.

## Patentansprüche

1. Elektrochemisches Verfahren zur Herstellung von Metallhydroxiden und/oder Metalloxidhydroxiden aus Metallionen und Hydroxidionen, **dadurch gekennzeichnet**, daß das Metallhydroxid und/oder Metalloxidhydroxid in einer kathodenseitig von einer bipolaren Membran begrenzten Kammer K gebildet wird, daß die erforderlichen Hydroxidionen mittels der bipolaren Membran mit anodenseltig angeordneter anionenselektiven Schicht entstehen, und daß die Metallionen In Gegenwart eines die Metallionen komplexierenden und sich in der Kammer K befindlichen Agens und bei einem pH-Wert > 7 der Kammer K zugeführt oder In der Kammer K gebildet werden.

2. Verfahren nach Anspruch 1, **dadurch gekennzeichnet**, daß die Metallionen in einer anodenseitig von einer Opferanode begrenzten und den Anodenraum bildenden Kammer K durch Auflösen der Opferanode entstehen.

3. Verfahren nach Anspruch 2, **dadurch gekennzeichnet**, daß man die abgebrannte Opferanode in Gegenwart von Säuren löst, und daß man die entstandenen Metallionen über eine anodenseitig angebrachte Kationenaustauschermembran einer weiteren Kammer K zuführt.

4. Verfahren nach Anspruch 1, **dadurch gekennzeichnet**, daß die Metallionen über eine anodenseitig angebrachte Kationenaustauschermembran In die Kammer K geführt werden.

5. Verfahren nach Anspruch 4, **dadurch gekennzeichnet**, daß die Metallionen durch Auflösen von Metallsalzen oder durch Auflösen der Metalle entstehen.

6. Verfahren nach einem oder mehreren der Ansprüche 1 bis 5, **dadurch gekennzeichnet**, daß das Metallhydroxid und/oder Metalloxidhydroxid in Gegenwart von Chlorid- und/oder Sulfationen gebildet wird.

7. Verfahren nach einem oder mehreren der Ansprüche 1 bis 6, **dadurch gekennzeichnet**, daß man Teile des Komplexierungsmittel und Metallhydroxid und/oder Metalloxidhydroxid enthaltenden Inhalt der Kammer K entfernt, daß man daraus das Metallhydroxid und/oder Metalloxidhydroxid abtrennt, und daß man den das Komplexierungsmittel enthaltenden Rest in die Kammer K zurückführt.

**8.** Verfahren nach einem oder mehreren der Ansprüche 1 bis 7, **dadurch gekennzeichnet**, daß man als Komplexierungsmittel Ammoniak und/oder eines oder mehrere Amine der allgemeinen Formel I einsetzt,

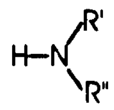 (I)

in der die Reste folgende Bedeutung haben:

R' = Wasserstoff, Alkyl oder Aryl mit jeweils 1 bis 6 Kohlenstoffatomen;
R" = Alkyl oder Aryl mit jeweils 1 bis 6 Kohlenstoffatomen.

**9.** Verfahren nach einem oder mehreren der Ansprüche 1 bis 8, **dadurch gekennzeichnet**, daß man als Metall eines oder mehrere aus der Gruppe Co, Ni, Cu, Fe, In, Mn, Sn, Zn, Zr, Ti, Al, Cd und U einsetzt.

**10.** Verfahren nach Anspruch 9, **dadurch gekennzeichnet**, daß man als Metall Ni und/oder Co einsetzt.

**11.** Verfahren nach einem oder mehreren der Ansprüche 1 bis 10, **dadurch gekennzeichnet**, daß man eine bipolare Membran mit einer anionenselektiven Schicht auf der Basis polymerer Alkylierungsmittel und monomerer Amine, oder polymerer Amine und monomerer Alkyllerungsmittel, oder polymerer Alkylierungsmittel und polymerer Amine einsetzt.

**12.** Verfahren nach Anspruch 11, **dadurch gekennzeichnet**, daß man eine bipolare Membran mit einer anionenselektiven Schicht auf der Basis eines oder mehrerer $-CHCl_2$-Gruppen tragender Polymere oder auf der Basis einer Mischung aus $-CHCl_2$-Gruppen tragenden Polymeren und solchen ohne $-CHCl_2$-Gruppen verwendet.

**13.** Verfahren nach Anspruch 12, **dadurch gekennzeichnet**, daß man eine bipolare Membran mit einer anionenselektiven Schicht auf der Basis von Polysulfonen, Polyethersulfonen, Poly(p-phenylensulfonen), Polystyrolen, Polyphenylenoxiden, Poly(2.6-dimethylphenylethern), Polyphenylensulfiden, Polyetherketonen (PEK), Polyetheretherketonen (PEEK) oder Polyetheretherketonketonen (PEEKK) verwendet.

**14.** Verfahren nach einem oder mehreren der Ansprüche 11 bis 13, **dadurch gekennzeichnet**, daß man eine bipolare Membran mit einer anionenselektiven Schicht auf der Basis von DABCO (1.4-Diazabicyclo-[2.2.2)octan), von 1.3-Bis(dimethylamino-2.2-dimethylpropan) oder einem anderen Diamin verwendet, welches alkallstabile, quartäre Ammonium-Ionen zu bilden vermag und bei welchem die Monoquaternisierung gegenüber der Bisquaternisierung durch eine unterschiedliche Nucleophilie von mindestens $\Delta\ pK_a>1.0$ begünstigt wird.

**15.** Verfahren nach Anspruch 14, **dadurch gekennzeichnet**, daß man eine bipolare Membran mit

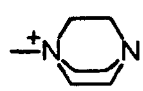

Gruppen in der anionenselektiven Schicht verwendet.

**16.** Verfahren nach Anspruch 14 oder 15, **dadurch gekennzeichnet**, daß man eine bipolare Membran mit

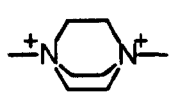 und/oder 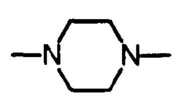

Brücken in der anionenselektiven Schicht verwendet.

**17.** Vorrichtung zur Durchführung des Verfahrens nach einem oder mehreren der Ansprüche 1, 2 und 6 bis 16 mit

folgenden Merkmalen:

- die Vorrichtung hat eine zylindrische Kopfgeometrie, an die sich eine kegelförmige Geometrie anschließt;
- der zylindrische Kopf weist zwei Elektroden auf, an die eine Potentialdifferenz anlegbar ist;
- der äußere Zylinder wird von der einen Elektrode gebildet;
- in der Mitte der Vorrichtung befindet sich ein Tauchrohr, um das die zweite Elektrode angebracht ist und das bis in den kegelförmigen Teil der Vorrichtung ragt;
- in der Mitte der inneren Elektrode befindet sich ein Auslaß, der mit dem Tauchrohr versehen ist;
- der zylinderförmige Teil weist einen Überlauf auf und der kegelförmige Teil einen Ablauf;
- zwischen Anode und Kathode befindet sich eine bipolare Membran, die den Anodenraum vom Kathodenraum trennt;
- die anionenselektive Schicht der bipolaren Membran ist der Anode zugewandt;
- der Innere Elektrodenraum weist an der Oberfläche zwei Bohrungen auf, je eine für den Einlaß und den Auslaß;
- die Zuführung in den äußeren Elektrodenraum erfolgt tangential zur Zylindergeometrie;
- die Anode ist als Opferanode ausgestaltet.

**18.** Vorrichtung nach Anspruch 17, **dadurch gekennzeichnet**, daß die Anode die äußere Elektrode bildet und die Kathode die innere.

**19.** Vorrichtung zur Durchführung des Verfahrens nach einem oder mehreren der Ansprüche 1 und 4 bis 16, **gekennzeichnet durch** folgende Membrankonfiguration,

$$\text{KATHODE - (BPM - KAT - AAT - )}_n \text{ BPM - KAT - ANODE}$$

in der die Abkürzungen und Indices folgende Bedeutung haben:

BPM = bipolare Membran mit anodenseitig angeordneter anionenselektiver Schicht
AAT = Anionenaustauschermembran
KAT = Kationenaustauschermembran
n = 1 bis 50.

**20.** Vorrichtung nach einem oder mehreren der Ansprüche 17 bis 19, **dadurch gekennzeichnet**, daß der Kathodenraum mit Leitgeometrien ausgestattet ist.

**21.** Vorrichtung nach einem oder mehreren der Ansprüche 17 bis 20, **dadurch gekennzeichnet**, daß der Anodenraum mit Leit- oder Drallschaufeln ausgestattet ist.

**22.** Vorrichtung nach einem oder mehreren der Ansprüche 17 bis 21, **dadurch gekennzeichnet**, daß die Kathode aus Edelstahl, aus Nickel oder aus einem platinierten Metall besteht.

**23.** Vorrichtung nach einem oder mehreren der Ansprüche 17 bis 22, **dadurch gekennzeichnet**, daß sie eine bipolare Membran mit einer anionenselektiven Schicht auf der Basis polymerer Alkylierungsmittel und monomerer Amine, oder polymerer Amine und monomerer Alkylierungsmittel, oder polymerer Alkylierungsmittel und polymerer Amine enthält.

**24.** Vorrichtung nach Anspruch 23, **dadurch gekennzeichnet**, daß sie eine bipolare Membran mit einer anionenselektiven Schicht auf der Basis eines oder mehrerer $-CHCl_2$-Gruppen tragender Polymere oder auf der Basis einer Mischung aus $-CHCl_2$-Gruppen tragenden Polymeren und solchen ohne $-CHCl_2$-Gruppen enthält.

**25.** Vorrichtung nach Anspruch 24, **dadurch gekennzeichnet**, daß sie eine bipolare Membran mit einer anionenselektiven Schicht auf der Basis von Polysulfonen, Polyethersulfonen, Poly(p-phenylensulfonen), Polystyrolen, Polyphenylenoxiden, Poly(2.6-dimethylphenylethern), Polyphenylensulfiden, Polyetherketonen (PEK), Polyetheretherketonen (PEEK) oder Polyetheretherketonketonen (PEEKK) enthält.

**26.** Vorrichtung nach einem oder mehreren der Ansprüche 23 bis 25, **dadurch gekennzeichnet**, daß sie eine bipolare Membran mit einer anionenselektiven Schicht auf der Basis von DABCO (1.4-Diazabicyclo-[2.2.2]octan), von 1.3-Bis(dimethylamino-2.2-dimethylpropan) oder einem anderen Diamin enthält, welches alkalistabile, quartäre

Ammonium-Ionen zu bilden vermag und bei welchem die Monoquaternisierung gegenüber der Bisquaternisierung durch eine unterschiedliche Nucleophilie von mindestens $\Delta$ $pK_a$>1.0 begünstigt wird.

**27.** Vorrichtung nach Anspruch 26, **dadurch gekennzeichnet**, daß sie eine bipolare Membran mit

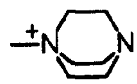

Gruppen in der anionenselektiven Schicht enthält.

**28.** Vorrichtung nach Anspruch 26 oder 27, **dadurch gekennzeichnet**, daß sie eine bipolare Membran mit

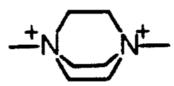

und/oder

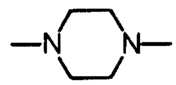

Brücken in der anionenselektiven Schicht enthält.

**Claims**

**1.** An electrochemical process for the production of metal hydroxides and/or metal oxide hydroxides from metal ions and hydroxide ions, characterized in that the metal hydroxide and/or metal oxide hydroxide is formed in of a chamber K bounded on the cathode side by a bipolar membrane, in that the required hydroxide ions are provided by means of the bipolar membrane with an anion-selective layer on the anode side, and in that the metal ions are added to the chamber K or are formed in the chamber K at a pH value >7, in the presence of an agent present in the chamber K and complexing the metal ions.

**2.** A process according to claim 1, characterized in that the metal ions are provided in a chamber K bounded on the anode side by a sacrificial anode and forming the anode space, through dissolution of the sacrificial anode.

**3.** A process according to claim 2, characterized in that the spent sacrificial anode is dissolved in the presence of acids and in that the resultant metal ions are fed into a further chamber K via a cation exchange membrane provided on the anode side.

**4.** A process according to claim 1, characterized in that the metal ions are passed into the chamber K via a cation exchange membrane provided on the anode side.

**5.** A process according to claim 4, characterized in that the metal ions result from dissolution of metal salts or by dissolving the metals.

**6.** A process according to one or more of claims 1 to 5, characterized in that the metal hydroxide and/or metal oxide hydroxide is formed in the presence of chloride and/or sulphate ions.

**7.** A process according to one or more of claims 1 to 6, characterized in that a portion of the content of the chamber K containing complexing agent and metal hydroxide and/or metal oxide hydroxide is removed and the metal hydroxide and/or metal oxide hydroxide is separated therefrom. and in that the residue containing the complexing agent is fed back into the chamber K.

**8.** A process according to one or more of claims 1 to 7, characterized in that there is used as the complexing agent ammonia and/or one or more amines of the general formula 1,

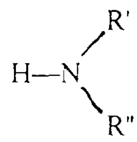 (1)

in which the residues have the following meaning:

R'= hydrogen, alkyl or aryl with 1 to 6 carbon atoms in each case,
R" = alkyl or aryl with 1 to 6 carbon atoms in each case.

**9.** A process according to one or more of claims I to 8, characterized in that one or more of the group Co, Ni, Cu, In, Mn, Sn, Zn, Zr, Ti, Al, Cd and U is used as the metal.

**10.** A process according to claim 9, characterized in that Ni and/or Co is used as the metal.

**11.** A process according to one or more of claims 1 to 10, characterized in that a bipolar membrane is used with an anion selective layer based on a polymeric alkylation agent and monomeric amines or polymeric amines and a monomeric alkylation agent, or a polymeric alkylation agnet and polymeric amines.

**12.** A process according to claim 11, characterized in that a bipolar membrane is used with an anion selective layer based on polymers carrying one or more $-CHCl_2-$ groups or on the basis of a mixture of polymers carrying $-CHCl_2-$ groups and such without $-CHCl_2-$ groups.

**13.** A process according to claim 12, characterized in that a bipolar membrane is used with an anion selective layer based on polysulphones, polyethersulphones, poly(p-phenylenesulphones), polystyrols, polyphenyleneoxides, poly(2.6-dimethylphenylethers), polyphenylenesulphides, polyetherketones (PEK), polyetheretherketones (PEEK) or polyetheretherketoneketones (PEEKK).

**14.** A process according to one or more of claims 11 to 13, characterized in that a bipolar membrane is used with an anion selective layer based on DABCO (1.4-diazabicyclo[2.2.2]octane, of 1.3-bis(dimethylamino-2.2-dimethylpropane) or another diamine, which can form alkali stable, quaternary ammonium ions and in which the mono-quaternizing is favoured over the bisquaternizing through a different nucleophilic power of at least $\Delta$ $pK_a$>1.0.

**15.** A process according to claim 14, characterized in that a bipolar membrane is used with

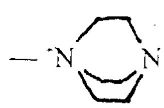

groups in the anode selective layer.

**16.** A process according to claim 14 or 15, characterized in that a bipolar membrane is used with

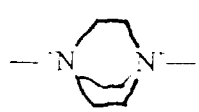 and/or 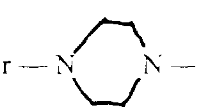

bridges in the anion selective layer.

**17.** Apparatus for carrying out the process according to one or more of claims 1, 2 and 6 to 16, with the following features:

- the apparatus has a cylindrical head geometry, adjoined by a conical geometry;
- the cylindrical head has two electrodes, between which a potential difference can be applied;
- the outer cylinder is formed by the one electrode;
- in the middle of the apparatus is located a dip tube, around which is fitted the second electrode and which projects into the conical part of the apparatus;
- an outlet is located in the middle of the inner electrode and is provided with the dip tube,
- the cylinder shaped part has an overflow and the conical part a drain;
- in between the anode and cathode is located a bipolar membrane, which divides the anode space from the cathode space;
- the anode selective layer of the bipolar membrane faces the anode;
- the inner electrode space has two bores at the surface, which serve one for the inlet and one for the outlet;
- the feed into the outer electrode space is effected tangentially to the cylinder geometry;
- the anode is in the form of a sacrificial anode.

**18.** Apparatus according to claim 17, characterized in that the anode forms the outer electrode and the cathode the inner.

**19.** Apparatus for carrying out the process according to one or more of claims 1 and 4 to 16, characterized by the following membrane configuration:

$$\text{CATHODE - (BPM - CAT - AET - )}_n \text{ BPM - CAT - ANODE}$$

in which the abbreviations and indices have the following meanings:

BPM = bipolar membrane with anion selective layer on the anode side
AET = anion exchange membrane
CAT = cation exchange membrane
n = 1 to 50.

**20.** Apparatus according to one or more of claims 17 to 19, characterized in that the cathode space is equipped with guide geometries.

**21.** Apparatus according to one or more of claims 17 to 20, characterized in that the anode space is equipped with guide or swirl vanes.

**22.** Apparatus according to one or more of claims 17 to 21, characterized in that the cathode consists of stainless steel, nickel or a platinized metal.

**23.** Apparatus according to one or more of claims 17 to 22, characterized in that it includes a bipolar membrane with a polymeric alkylation agent and monomeric amines or polymeric amines and a monomeric alkylation agent, or a polymeric alkylation agent and polymeric amines.

**24.** Apparatus according to claim 23, characterized in that it includes a bipolar membrane with an anion selective layer based on polymers carrying one or more $-CHCl_2-$ groups or on the basis of a mixture of polymers carrying $-CHCl_2-$ groups and such without $-CHCl_2-$ groups.

**25.** Apparatus according to claim 24, characterized in that it includes a bipolar membrane with an anion selective layer based on polysulphones, polyethersulphones, poly(p-phenylenesulphones), polystyrols, polyphenyleneoxides, poly(2.6-dimethylphenylethers). polyphenylenesulphides, polyetherketones (PEK). polyetheretherketones (PEEK) or polyetheretherketoneketones (PEEKK).

**26.** Apparatus according to one or more of claims 23 to 25, characterized in that it includes a bipolar membrane with an anion selective layer based on DABCO (1,4-diazabicyclo[2.2.2]octane, of 1.3-bis(dimethylamino-2.2-dimethylpropane) or another diamine, which can form alkali stable, quaternary ammonium ions and in which the monoquaternizing is favoured over the bisquaternizing through a different nucleophilic power of at least $\Delta$ $pK_a$>1.0.

**27.** Apparatus according to claim 26, characterized in that it includes a bipolar membrane with

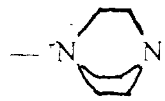

groups in the anode selective layer.

**28.** Apparatus according to claim 26 or 27, characterized in that it includes a bipolar membrane with

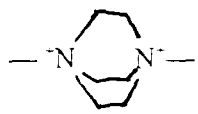

and/or

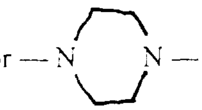

bridges in the anion selective layer.

## Revendications

**1.** Procédé électrochimique de production d'oxydes métalliques et/ou d'hydroxydes métalliques à partir d'ions métalliques et d'ions hydroxyde,
caractérisé en ce que
l'hydroxyde métallique et/ou l'hydroxyde d'oxyde métallique est formé dans une chambre K limitée du côté de la cathode par une membrane bipolaire, en ce que les ions hydroxyde nécessaires apparaissent au moyen de la membrane bipolaire avec couche anionosélective disposée du côté de l'anode, et en ce que les ions métalliques sont introduits en présence d'un agent complexant les ions métalliques et se trouvant dans la chambre K et à un pH supérieur à 7 dans la chambre K ou sont formés dans la chambre K.

**2.** Procédé selon la revendication 1,
caractérisé en ce que
les ions métalliques apparaissent dans une chambre K limitée du côté de l'anode par une anode sacrifiée et formant l'espace d'anode, par une dissolution de l'anode sacrifiée.

**3.** Procédé selon la revendication 2,
caractérisé en ce qu'
on dissout l'anode sacrifiée et consumée en présence d'acides, et en ce qu'on introduit les ions métalliques apparus dans une autre chambre K à travers une membrane échangeuse de cations disposée du côté de l'anode.

**4.** Procédé selon la revendication 1,
caractérisé en ce que
les ions métalliques sont conduits dans la chambre K à travers une membrane échangeuse de cations disposée du côté de l'anode.

**5.** Procédé selon la revendication 4,
caractérisé en ce que
les ions métalliques apparaissent par dissolution de sels métalliques ou par dissolution des métaux.

**6.** Procédé selon une ou plusieurs des revendications 1 à 5,
caractérisé en ce que
l'hydroxyde métallique et/ou l'hydroxyde d'oxyde métallique est formé en présence d'ions chlorure et/ou sulfate.

**7.** Procédé selon une ou plusieurs des revendications 1 à 6,
caractérisé en ce qu'
on retire des parties d'un agent de complexation et le contenu de la chambre K contenant l'hydroxyde métallique et/ou l'hydroxyde d'oxyde métallique, en ce qu'à partir de cela on sépare l'hydroxyde métallique et/ou l'hydroxyde d'oxyde métallique, et en ce qu'on réintroduit dans la chambre K le résidu contenant l'agent de complexation.

**8.** Procédé selon une ou plusieurs des revendications 1 à 7, caractérisé en ce qu' on utilise comme agent de complexation l'ammoniac et/ou une ou plusieurs amines de formule générale 1

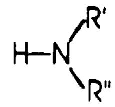

(I)

dans laquelle les radicaux ont la signification suivante :

R' = hydrogène, alkyle ou aryle avec à chaque fois de 1 à 6 atomes de carbone ;
R" = alkyle ou aryle avec à chaque fois de 1 à 6 atomes de carbone.

**9.** Procédé selon une ou plusieurs des revendications 1 à 8, caractérisé en ce qu' on utilise comme métal un ou plusieurs métaux du groupe Co, Ni, Cu, Fe, In, Mn, Sn, Zn, Ti, Al, Cd et U.

**10.** Procédé selon la revendication 9, caractérisé en ce qu' on utilise comme métal Ni et/ou Co.

**11.** Procédé selon une ou plusieurs des revendications 1 à 10, caractérisé en ce qu' on utilise une membrane bipolaire avec une couche anionosélective à base d'agents alkylants polymères et d'amines monomères, ou d'amines polymères et d'agents alkylants monomères, ou d'agents alkylants polymères et d'amines polymères.

**12.** Procédé selon la revendication 11, caractérisé en ce qu' on utilise une membrane bipolaire avec une couche anionosélective à base d'un ou plusieurs polymères portant des groupes $-CHCl_2$ ou à base d'un mélange de polymères portant des groupes $-CHCl_2$ et de polymères dépourvus de groupes-$CHCl_2$.

**13.** Procédé selon la revendication 12, caractérisé en ce qu' on utilise une membrane bipolaire avec une couche anionosélective à base de polysulfones, de polyéthersulfones, de poly(p-phénylènesulfones), de polystyrène, d'oxydes de polyphénylène, de polyéthers (2,6-diméthylphényliques), de sulfures de polyphénylène, de polyéthercétones (PEK), de polyéther éthercétones (PEEK) ou de polyéthers éthercétonescétones (PEEKK).

**14.** Procédé selon une ou plusieurs des revendications 11 à 13, caractérisé en ce qu' on utilise une membrane bipolaire avec une couche anionosélective à base de DABCO (1,4-diazabicyclo-[2,2,2-] octane, de 1,3-bis(diméthylamino-2,2-diméthylpropane) ou d'une autre diamine, qui peut former des ions ammonium quaternaires stables vis-à-vis des bases et où la monoquaternisation est favorisée par rapport à la bi-quaternisation par une nucléophilie différentielle d'au moins $\Delta$ $pK_a$ > 1,0.

**15.** Procédé selon la revendication 14, caractérisé en ce qu' on utilise une membrane bipolaire avec des groupes

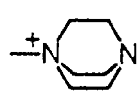

dans la couche anionosélective.

**16.** Procédé selon la revendication 14 ou 15,
caractérisé en ce qu'
on utilise une membrane bipolaire avec des ponts

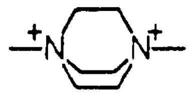

et/ou

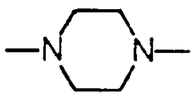

dans la couche anionosélective.

**17.** Dispositif de réalisation du procédé selon une ou plusieurs des revendications 1, 2 et 6 à 18 avec les caractéristiques suivantes :

- Le dispositif a une géométrie de tête cylindrique, à laquelle s'adjoint une géométrie conique ;
- La tête cylindrique présente deux électrodes, auxquelles on peut appliquer une différence de potentiel ;
- Le cylindre externe est formé par une électrode ;
- Au milieu du dispositif se trouve un tube plongeur, autour duquel est disposée la seconde électrode et qui atteint jusque dans la partie conique du dispositif ;
- Au milieu de l'électrode interne se trouve une sortie qui est pourvue du tube plongeur ;
- La partie cylindrique présence un écoulement par le haut et la partie conique un écoulement par le bas ;
- Entre l'anode et la cathode se trouve une membrane bipolaire, qui sépare l'espace de l'anode de l'espace de la cathode ;
- La couche anionosélective de la membrane bipolaire est maintenue vers l'anode ;
- L'espace d'électrode interne présente à sa surface deux perforations, l'une pour l'entrée et l'autre pour la sortie ;
- L'introduction dans l'espace d'électrode externe s'effectue tangentiellement à la géométrie cylindrique ;
- L'anode est en forme d'anode sacrifiée.

**18.** Dispositif selon la revendication 17,
caractérisé en ce que
l'anode forme l'électrode externe et en ce que la cathode forme la cathode interne.

**19.** Dispositif pour réaliser le procédé selon une ou plusieurs des revendications 1 et 4 à 16,
caractérisé par
la configuration de membrane suivante :

$$\text{Cathode - (MBP - MEC - MEA -)}_n \text{ MBP - MEC - anode}$$

où les abréviations et les indices ont les significations suivantes :

MBP = membrane bipolaire avec couche anionosélective disposée du côté de l'anode
MEA = membrane échangeuse d'anions
MEC = membrane échangeuse de cations
n = 1 à 50.

**20.** Dispositif selon une ou plusieurs des revendications 1 à 19,

caractérisé en ce que
l'espace de la cathode est équipé de géométries conductrices.

**21.** Dispositif selon une ou plusieurs des revendications 17 à 20,
caractérisé en ce que
l'espace de l'anode est équipé d'aubes conductrices ou rotatives.

**22.** Dispositif selon une ou plusieurs des revendications 17 à 21,
caractérisé en ce que
la cathode se compose d'acier trempé, de nickel ou d'un métal platiné.

**23.** Dispositif selon l'une ou plusieurs des revendications 17 à 22,
caractérisé en ce qu'
il contient une membrane bipolaire avec une couche anionosélective à base d'agents alkylants polymères et d'amines monomères, ou d'amines polymères et d'agents alkylants monomères, ou d'agents alkylants polymères et d'amines polymères.

**24.** Dispositif selon la revendication 23,
caractérisé en ce qu'
il contient une membrane bipolaire avec une couche anionosélective à base d'un ou plusieurs polymères portant des groupes $-CHCl_2$ ou à base d'un mélange de polymères portant des groupes $-CHCl_2$ et de polymères dépourvus de groupes-$CHCl_2$.

**25.** Dispositif selon la revendication 24,
caractérisé en ce qu'
il contient une membrane bipolaire avec une couche anionosélective à base de polysulfones, de polyéthersulfones, de poly(p-phénylène sulfones), de polystyrènes, d'oxydes de polyphénylène, de poly(éthers 2,6-diméthylphényliques), de sulfures de polyphénylène, de polyéthercétones (PEK), de polyétheréthercétones (PEEK) ou des polyétheréthercétone cétones (PEEKK).

**26.** Dispositif selon une ou plusieurs des revendications 23 à 25,
caractérisé en ce qu'
il contient une membrane bipolaire avec une couche anionosélective à base de DABCO (1,4-diazabicyclo-[2,2,2] octane) ou d'une autre diamine, qui peut former des ions ammonium quaternaires stables vis-à-vis des bases et où la monoquaternisation est favorisée par rapport à la bi-quaternisation par une nucléophilie différentielle d'au moins $\Delta$ $pK_a > 1,0$.

**27.** Dispositif selon la revendication 26,
caractérisé en ce qu'
il contient une membrane bipolaire avec des groupes

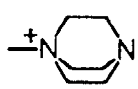

dans la couche anionosélective.

**28.** Dispositif selon la revendication 26 ou 27,
caractérisé en ce qu'
il contient une membrane bipolaire avec des ponts

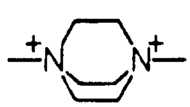

et/ou

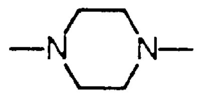

dans la couche anionosélective.

F I G U R 1

Membrankonfiguration der Variante 1:

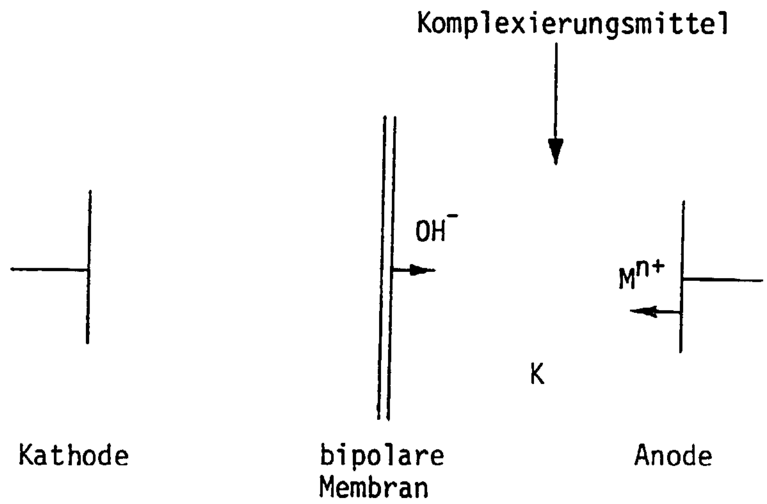


F I G U R 2

Membrankonfiguration der Variante 2:

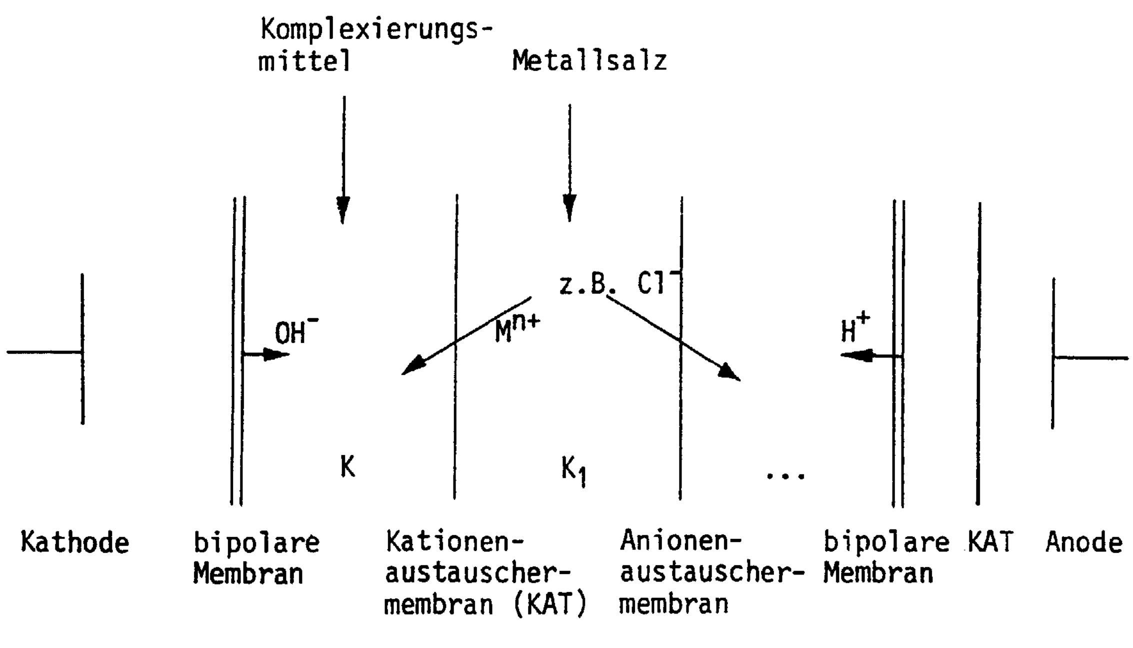

FIGUR 3

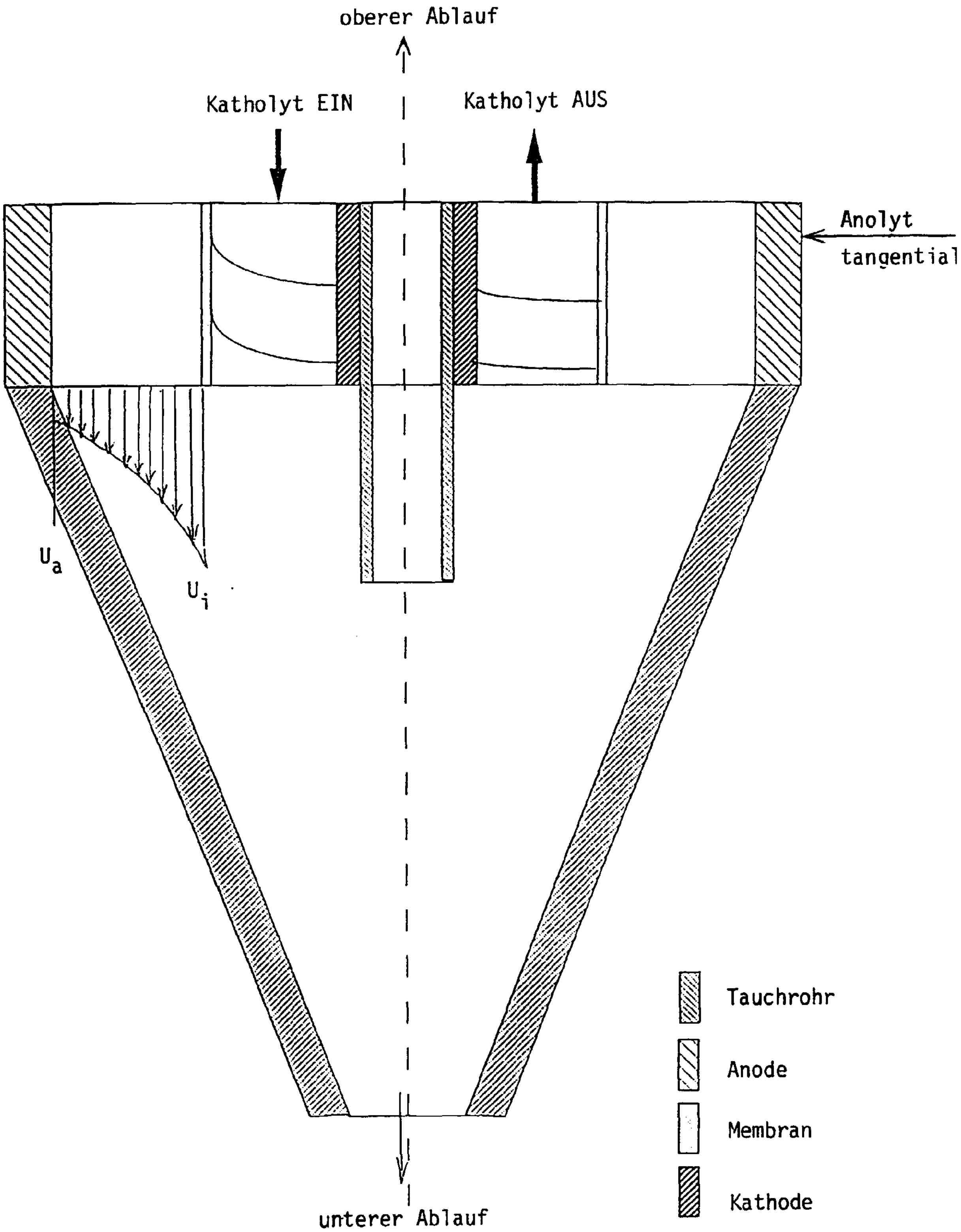
oberer Ablauf
Katholyt EIN
Katholyt AUS
Anolyt
tangential
$U_a$
$U_i$
Tauchrohr
Anode
Membran
Kathode
unterer Ablauf